# EUROPEAN PATENT SPECIFICATION

(11) **EP 4 358 019 B1**
(45) Date of publication and mention of the grant of the patent: **02.09.2026**
(21) Application number: 22851911.2
(22) Date of filing: 21.07.2022
(51) Int. Cl.: G06T 5/50

(54) **IMAGE PROCESSING METHOD, ELECTRONIC DEVICE, AND COMPUTER READABLE STORAGE MEDIUM**
BILDVERARBEITUNGSVERFAHREN, ELEKTRONISCHE VORRICHTUNG UND COMPUTERLESBARES SPEICHERMEDIUM
PROCÉDÉ DE TRAITEMENT D'IMAGE, DISPOSITIF ÉLECTRONIQUE ET SUPPORT DE STOCKAGE LISIBLE PAR ORDINATEUR

(30) Priority: 05.08.2021 CN 202110899252
(43) Date of publication of application: 24.04.2024
(73) Proprietor: ZTE Corporation, Shenzhen, Guangdong 518057 (CN)
(72) Inventor: ZHENG, Liang, Shenzhen, Guangdong 518057 (CN)
(74) Representative: Ipsilon
(86) International application number: PCT/CN2022/106966
(87) International publication number: WO 2023/011197

(56) References cited:
- WO-A1-2017/152402
- CN-A- 105 894 449
- CN-A- 111 223 058
- CN-A- 111 784 603
- US-A1- 2015 085 174
- US-A1- 2015 092 089
- US-A1- 2017 099 435
- US-A1- 2017 289 555

## Description

### TECHNICAL FIELD

Embodiments of the present disclosure relate to the field of terminal technology, and in particular, to an image processing method, an electronic device, and a computer readable storage medium.

### BACKGROUND

Currently, a characteristic of having multiple camera lenses is a core selling point of a camera, because the photography technology of collaboratively shooting with multiple camera lenses is developing rapidly and can greatly promote the degree of satisfaction of photography. However, if digital zooming or switching between camera lenses is to be performed during collaboratively shooting with the multiple camera lenses, a problem that the switching or zooming is unsmooth may exist.

U.S. Patent Application US20170099435A1 provides an image generation method based on a dual camera module. The dual camera module comprises a first camera lens of a large single-pixel size and a second camera lens of a high resolution. The first camera lens generates a first image. The second camera lens generates a second image. The first image and the second image are synthesized to generate a third image. Correspondingly, a dual camera module is provided. With the dual camera module, by combining the advantages of the two camera lens, color noise and luminance noise of an image are reduced.

U.S. Patent Application US20150092089A1 provides a system and a method for acquiring a first image and a second image, where the first image has a higher optical density than the second image, and combining the first image with the second image to generate an output image with reduced aliasing artifacts.

U.S. Patent Application US20150085174A1 discloses a multi-aperture imaging system comprising a first camera with a first sensor that captures a first image and a second camera with a second sensor that captures a second image, the two cameras having either identical or different FOVs. The first sensor may have a standard color filter array (CFA) covering one sensor section and a non-standard color CFA covering another. The second sensor may have either Clear or standard CFA covered sections. Either image may be chosen to be a primary or an auxiliary image, based on a zoom factor. An output image with a point of view determined by the primary image is obtained by registering the auxiliary image to the primary image.

### SUMMARY

In a first aspect, an embodiment of the present disclosure provides an image processing method, as claimed in the claimed invention.

In a second aspect, an embodiment of the present disclosure provides an electronic device, including: at least one processor; and a memory having stored thereon at least one computer program, the at least one computer program, executed by the at least one processor, causes the at least one processor to implement the image processing method described above.

In a third aspect, an embodiment of the present disclosure provides a computer readable storage medium having stored thereon a computer program, the computer program, executed by a processor, causes the processor to implement the image processing method described above.

### BRIEF DESCRIPTION OF DRAWINGS

FIG. 1 is a flowchart illustrating an image processing method according to an embodiment of the present disclosure;
FIG. 2 is a schematic diagram of first image data according to an embodiment of the present disclosure;
FIG. 3 is a schematic diagram of second image data according to an embodiment of the present disclosure;
FIG. 4 is a schematic diagram of third chrominance data according to an embodiment of the present disclosure;
FIG. 5 is a schematic diagram of fourth chrominance data according to an embodiment of the present disclosure;
FIG. 6 is a schematic diagram of first luminance data according to an embodiment of the present disclosure;
FIG. 7 is a schematic diagram of fused image data according to an embodiment of the present disclosure;
FIG. 8 is a block diagram of an image processing apparatus according to an embodiment of the present disclosure;
FIG. 9 is a block diagram of a terminal according to an embodiment of the present disclosure; and
FIG. 10 is a block diagram of an electronic device according to an embodiment of the present disclosure.

### DETAIL DESCRIPTION OF EMBODIMENTS

In order to enable those of ordinary skill in the art to better understand the technical solution of the present disclosure, an image processing method, an electronic device, and a computer readable storage medium provided by the present disclosure are described in detail below with reference to the drawings.

Exemplary embodiments will be described more fully below with reference to the drawings, but the exemplary embodiment described herein may be embodied in different forms, and the present disclosure should not be interpreted as being limited to the embodiment described herein. The embodiments are provided to make the present disclosure more thorough and complete, and are intended to enable those of ordinary skill in the art to fully understand the scope of the present disclosure.

The embodiments described herein and the features therein may be combined with one another if no conflict is incurred.

The term "and/or" used herein includes any or all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the terms "comprise/include" and/or "be made/formed of" used herein indicate the presence of the particular features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the existing technology and the background of the present disclosure, and should not be interpreted in an idealized or overly formal sense unless expressly so defined herein.

If digital zooming or switching between camera lenses is to be performed during collaboratively shooting with multiple camera lenses, a main technique is to calculate Auto White Balance (AWB) and Automatic Exposure (AE) of the camera lenses through a 3A algorithm built in an Image Signal Processing (ISP) end, and design an algorithm and a calibration coefficient for a conversion between different camera lenses according to statistical results of color temperatures and luminance. Such technique relies heavily on a debugging result, and for a module of camera lenses varying greatly in consistency, such technique may easily cause a problem that effects of the camera lenses before and after the switching between the camera lenses is performed are inconsistent, such as problems of color deviation, abnormal brightness, and poor clarity, which may result in unsmooth switching between the camera lenses.

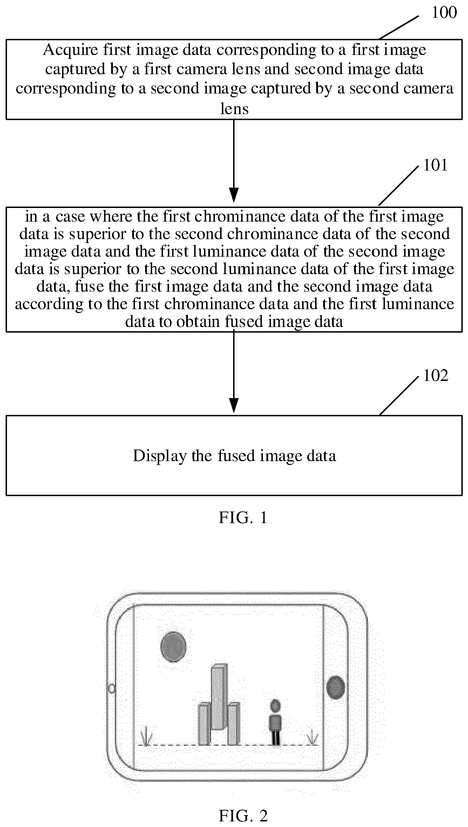

FIG. 1 is a flowchart illustrating an image processing method according to an embodiment of the present disclosure.

In a first aspect, referring to FIG. 1, an embodiment of the present disclosure provides an image processing method applicable to a terminal including two or more camera lenses, and the camera lenses included in the terminal may include, but are not limited to, following combinations: a ultra-wide-angle camera lens plus a wide-angle camera lens (main camera lens), a wide-angle camera lens (main camera lens) plus a telephoto camera lens, a wide-angle camera lens (main camera lens) plus a periscope camera lens, a ultra-wide-angle camera lens plus a wide-angle camera lens (main camera les) plus a telephoto camera lens, a ultra-wide-angle camera lens plus a wide-angle camera lens (main camera lens) plus a periscope camera lens, and a ultra-wide-angle camera lens plus a wide-angle camera lens (main camera lens) plus a telephoto camera lens plus a periscope camera lens.

The image processing method includes operation 100 to operation 102.

In operation 100, first image data corresponding to a first image captured by a first camera lens and second image data corresponding to a second image captured by a second camera lens are acquired.

In some exemplary implementations, it is feasible that, during digital zooming or switching between camera lenses being performed, the first camera lens is used to capture the first image to obtain the first image data, and the second camera lens is used to capture the second image to obtain the second image data.

**In** some exemplary implementations, it is feasible that, after the digital zooming or the switching between the camera lenses is completed, the first camera lens is used to capture the first image to obtain the first image data, and the second camera lens is used to capture the second image to obtain the second image data.

**In** some exemplary implementations, it is feasible that, during the digital zooming or the switching between the camera lenses being performed, or after the digital zooming or the switching between the camera lenses is completed, in a case where a preset condition is met, the first camera lens is used to capture the first image to obtain the first image data, and the second camera lens is used to capture the second image to obtain the second image data.

In some exemplary implementations, the preset condition includes at least one of: first chrominance data of the first image data is superior to second chrominance data of the second image data, and first luminance data of the second image data is superior to second luminance data of the first image data; the second luminance data of the first image data is superior to the first luminance data of the second image data, and the second chrominance data of the second image data is superior to the first chrominance data of the first image data; in a case of switching from the first camera lens to the second camera lens, a color deviation of the second camera lens is greater than a color deviation of the first camera lens, the color deviation referring to a visible obvious difference in a same scene; in the case of switching from the first camera lens to the second camera lens, a time duration for adjusting a color state of the second image data to be the same as a color state of the first image data is greater than or equal to a preset time duration; in the case of switching from the first camera lens to the second camera lens, a luminance fluctuation of the second camera lens is greater than a luminance fluctuation of the first camera lens; or in the case of switching from the first camera lens to the second camera lens, a time duration for adjusting a luminance state of the second image data to be the same as a luminance state of the first image data is greater than or equal to a preset time duration.

**In** some exemplary implementations, the first chrominance data of the first image data being superior to the second chrominance data of the second image data includes at least one of: an accuracy of the first chrominance data of the first image data is greater than an accuracy of the second chrominance data of the second image data; or a signal-to-noise ratio of the first chrominance data of the first image data is greater than a signal-to-noise ratio of the second chrominance data of the second image data.

In some exemplary implementations, the first luminance data of the second image data being superior to the second luminance data of the first image data includes at least one of: an accuracy of the first luminance data of the second image data is greater than an accuracy of the second luminance data of the first image data; or a signal-to-noise ratio of the first luminance data of the second image data is greater than a signal-to-noise ratio of the second luminance data of the first image data.

It should be noted that each camera lens, during performing digital zooming, has a limited digital zoom range, the camera lens is to be switched if a focal length to be achieved by the digital zooming exceeds the digital zoom range of the camera lens, and in general, the camera lens is to be switched to a camera lens having a digital zoom range adjacent to the digital zoom range of the current camera lens, i.e., a camera lens having a digital zoom range with a minimum difference from the digital zoom range of the current camera lens. For example, a digital zoom range of Camera lens I is from 1× digital zoom to 5× digital zoom, a digital zoom range of Camera lens II is from 6× digital zoom to 10× digital zoom, and Camera lens I is currently in an operating state and has a 3× focal length; if a user is to change the focal length to 7× focal length through digital zooming, the focal length to be achieved by the digital zooming exceeds the digital zoom range of Camera lens I, and thus Camera lens I is to be switched to Camera lens II to enable Camera lens II to operate, so that the focal length is changed to the 7× focal length.

In some exemplary implementations, the first camera lens is a camera lens operating before switching between camera lenses is performed and the second camera lens is a camera lens operating after switching between camera lenses is performed; or the first camera lens is a camera lens operating before digital zooming is performed, and the second camera lens is a camera lens operating after digital zooming is performed; or the first camera lens is a camera lens currently performing digital zooming, and the second camera lens is a camera lens having a digital zoom range with a minimum difference from a digital zoom range of the first camera lens.

In some exemplary implementations, the second camera lens is a camera lens operating before switching between camera lenses is performed, and the first camera lens is a camera lens operating after switching between camera lenses is performed; or the second camera lens is a camera lens operating before digital zooming is performed, and the first camera lens is a camera lens operating after digital zooming is performed; or the second camera lens is a camera lens currently performing digital zooming, and the first camera lens is a camera lens having a digital zoom range with a minimum difference from a digital zoom range of the second camera lens.

In some exemplary implementations, the first image data and the second image data may be captured simultaneously or not.

In some exemplary implementations, a scene corresponding to a part of the first image data overlaps a scene corresponding to a part of the second image data, that is, a part of the first image data and a part of the second image data are obtained by shooting a same scene.

In operation 101, in a case where the first chrominance data of the first image data is superior to the second chrominance data of the second image data and the first luminance data of the second image data is superior to the second luminance data of the first image data, the first image data and the second image data are fused according to the first chrominance data and the first luminance data to obtain fused image data.

In the image processing method provided by the embodiment of the present disclosure, the qualities of the chrominance data and the luminance data of the image data are determined by hardware of the camera lenses together with an image algorithm, the quality of the image data in a RAW format is determined by the quality of a sensor and the qualities of the camera lenses, and the quality of an image in a YUV format or a YCbCr format is determined by the image algorithm; the image data in the RAW format is the original image data acquired by the camera lenses, Y represents the luminance data of the processed image data obtained by processing the image data in the RAW format through the image algorithm, and UV or CbCr represents the chrominance data of the processed image data obtained by processing the image data in the RAW format through the image algorithm.

Six cases are described below for respectively illustrating how to obtain the fused image data.

In a first case, a field of view (FOV) corresponding to the first image data is greater than a field of view corresponding to the second image data; and the first camera lens is the camera lens operating before switching between camera lenses is performed, and the second camera lens is the camera lens operating after switching between camera lenses is performed; or the first camera lens is the camera lens operating before digital zooming is performed, and the second camera lens is the camera lens operating after digital zooming is performed; or the first camera lens is the camera lens currently performing digital zooming, and the second camera lens is the camera lens having the digital zoom range with the minimum difference from the digital zoom range of the first camera lens.

In some exemplary implementations, fusing the first image data and the second image data according to the first chrominance data and the first luminance data to obtain the fused image data includes: in the case where the field of view corresponding to the first image data is greater than the field of view corresponding to the second image data, acquiring third chrominance data from the first chrominance data, with the third chrominance data corresponding to a field of view the same as a field of view corresponding to the first luminance data; scaling the third chrominance data to obtain fourth chrominance data having a size the same as a size of the first luminance data; and combining the fourth chrominance data with the first luminance data to obtain the fused image data.

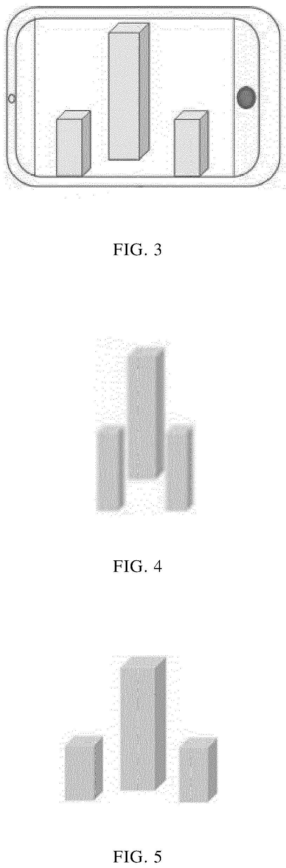

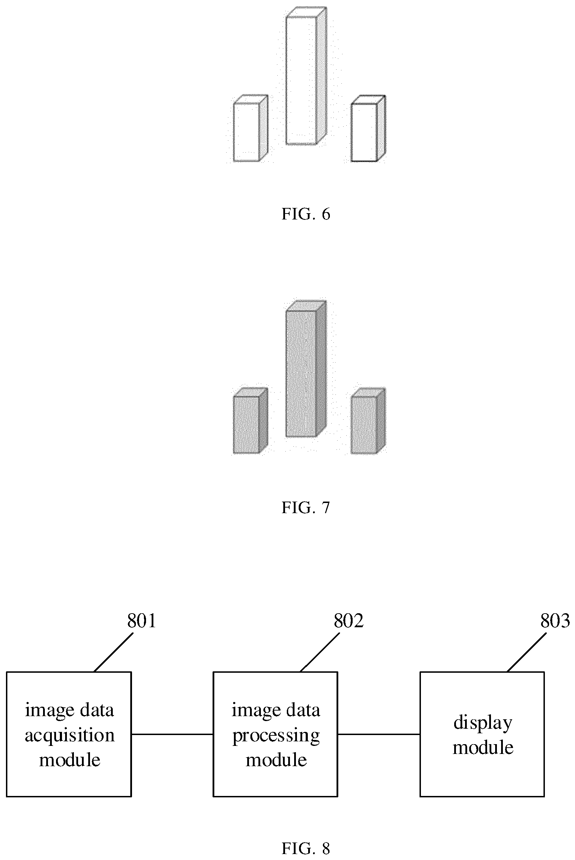

For example, the first image data is as shown in FIG. 2, the second image data is as shown in FIG. 3, the third chrominance data is as shown in FIG. 4, the fourth chrominance data is as shown in FIG. 5, the first luminance data is as shown in FIG. 6, and the fused image data finally obtained is as shown in FIG. 7.

As shown in FIG. 5, the fourth chrominance data obtained by amplifying the third chrominance data is relatively blurred. As shown in FIG. 7, the fused image data obtained by combining the fourth chrominance data with the first luminance data is clearer than the fourth chrominance data, and retains a color of the fourth chrominance data, which makes the process of switching between the camera lenses smoother.

In some exemplary implementations, acquiring the third chrominance data from the first chrominance data includes: determining a size of the third chrominance data according to the field of view corresponding to the first image data and the field of view corresponding to the second image data; determining a first position of a center of the second image data in the first image data; and acquiring the third chrominance data from the first chrominance data according to the size of the third chrominance data and the first position.

In some exemplary implementations, determining the size of the third chrominance data according to the field of view corresponding to the first image data and the field of view corresponding to the second image data includes: determining a first scale factor according to the field of view corresponding to the first image data and the field of view corresponding to the second image data; and determining the size of the third chrominance data according to the first scale factor.

In some exemplary implementations, determining the first scale factor according to the field of view corresponding to the first image data and the field of view corresponding to the second image data includes: calculating the first scale factor by a formula $Fk 1 = \frac{tan \frac{{FOV}_{2}}{2}}{tan \frac{{FOV}_{1}}{2}}$, where Fk1 is the first scale factor, FOV₂ is the field of view corresponding to the second image data, and FOV₁ is the field of view corresponding to the first image data.

In some exemplary implementations, determining the size of the third chrominance data according to the first scale factor includes: determining a length of the third chrominance data to be h1×Fk1 and a width of the third chrominance data to be w1×Fk1, where Fk1 is the first scale factor, h1 is a length of the first chrominance data, and w1 is a width of the first chrominance data.

In some exemplary implementations, determining the first position of the center of the second image data in the first image data includes: determining the first position according to a pre-stored offset between the first camera lens and the second camera lens.

In some exemplary implementations, the offset between the first camera lens and the second camera lens is an offset between a center of the first image data and the center of the second image data.

In some exemplary implementations, determining the first position of the center of the second image data in the first image data includes: searching a preset central neighborhood in the first image data for a position with a minimum shooting deviation as the first position.

In some exemplary implementations, in a case where any pixel in the central neighborhood overlaps a center pixel of the second image data, a shooting deviation of an overlapping portion of the first image data and the second image data (i.e., the first image data and the second image data are overlapped in the overlapping portion) is calculated by a formula $Δ E = \frac{1}{h 2 \times w 2} {\sum }_{i = 0}^{h 2} {\sum }_{j = 0}^{w 2} {\left({D}_{1}\left(i, j\right)-{D}_{2}\left(i, j\right)\right)}^{2}$, and a position of the pixel corresponding to the minimum shooting deviation is the first position.

ΔE is the shooting deviation, h2 is a length of the overlapping portion of the first image data and the second image data, w2 is a width of the overlapping portion of the first image data and the second image data, *D*₁(*i, j*) is a value of a pixel in an i^{th} row and in a j^{th} column of the image data of the first image data in the overlapping portion, and *D*₂(*i, j*) is a value of a pixel in an i^{th} row and in a j^{th} column of the image data of the second image data in the overlapping portion.

In a case where a data amount of the overlapping portion of the first image data and the second image data is greater than a preset threshold, the image data of a part of the overlapping portion may be intercepted for calculation. If a distortion of the image data exists, an operation for image alignment may be realized by using other algorithms such as the Oriented Fast and Rotated Brief (ORB) algorithm and the Binary Robust Independent Elementary Features (BRIEF) algorithm to ensure the accuracy.

In some exemplary implementations, acquiring the third chrominance data from the first chrominance data according to the size of the third chrominance data and the first position includes: acquiring the chrominance data, having a size the same as the size of the third chrominance data, from the first chrominance data by taking the first position as a center, as the third chrominance data.

In a second case, a field of view corresponding to the first image data is less than a field of view corresponding to the second image data; and the second camera lens is the camera lens operating before switching between camera lenses is performed, and the first camera lens is the camera lens operating after switching between camera lenses is performed; or the second camera lens is the camera lens operating before digital zooming is performed, and the first camera lens is the camera lens operating after digital zooming is performed; or the second camera lens is the camera lens currently performing digital zooming, and the first camera lens is the camera lens having the digital zoom range with the minimum difference from the digital zoom range of the second camera lens.

In some exemplary implementations, fusing the first image data and the second image data according to the first chrominance data and the first luminance data to obtain the fused image data includes: in the case where the field of view corresponding to the first image data is less than the field of view corresponding to the second image data, acquiring fourth luminance data from the first luminance data, with the fourth luminance data having a field of view the same as a field of view corresponding to the first chrominance data; scaling the fourth luminance data to obtain fifth luminance data having a size the same as a size of the first chrominance data; and combining the fifth luminance data with the first chrominance data to obtain the fused image data.

In some exemplary implementations, acquiring the fourth luminance data from the first luminance data includes: determining a size of the fourth luminance data according to the field of view corresponding to the first image data and the field of view corresponding to the second image data; determining a second position of a center of the first image data in the second image data; and acquiring the fourth luminance data from the first luminance data according to the size of the fourth luminance data and the second position.

In some exemplary implementations, determining the size of the fourth luminance data according to the field of view corresponding to the first image data and the field of view corresponding to the second image data includes: determining a second scale factor according to the field of view corresponding to the first image data and the field of view corresponding to the second image data; and determining the size of the fourth luminance data according to the second scale factor.

In some exemplary implementations, determining the second scale factor according to the field of view corresponding to the first image data and the field of view corresponding to the second image data includes: calculating the second scale factor by a formula $Fk 2 = \frac{tan \frac{{FOV}_{1}}{2}}{tan \frac{{FOV}_{2}}{2}}$, where Fk2 is the second scale factor, FOV₂ is the field of view corresponding to the second image data, and FOV₁ is the field of view corresponding to the first image data.

In some exemplary implementations, determining the size of the fourth luminance data according to the second scale factor includes: determining a length of the fourth luminance data to be h3×Fk2 and a width of the fourth luminance data to be w3×Fk2 , where Fk2 is the second scale factor, h3 is a length of the first luminance data, and w3 is a width of the first luminance data.

In some exemplary implementations, determining the second position of the center of the first image data in the second image data includes: determining the second position according to a pre-stored offset between the first camera lens and the second camera lens.

In some exemplary implementations, the offset between the first camera lens and the second camera lens is an offset between the center of the first image data and a center of the second image data.

In some exemplary implementations, determining the second position of the center of the first image data in the second image data includes: searching a preset central neighborhood in the second image data for a position with a minimum shooting deviation as the second position.

In some exemplary implementations, in a case where any pixel in the central neighborhood overlaps a center pixel of the first image data, a shooting deviation of an overlapping portion of the first image data and the second image data (i.e., the first image data and the second image data are overlapped in the overlapping portion) is calculated by a formula $Δ E = \frac{1}{h 2 \times w 2} {\sum }_{i = 0}^{h 2} {\sum }_{j = 0}^{w 2} {\left({D}_{1}\left(i, j\right)-{D}_{2}\left(i, j\right)\right)}^{2}$, and a position of the pixel corresponding to the minimum shooting deviation is the second position.

ΔE is the shooting deviation, h2 is a length of the overlapping portion of the first image data and the second image data, w2 is a width of the overlapping portion of the first image data and the second image data, *D*₁(*i, j*) is a value of a pixel in an i^{th} row and in a j^{th} column of the image data of the first image data in the overlapping portion, and *D*₂*(i, j)* is a value of a pixel in an i^{th} row and in a j^{th} column of the image data of the second image data in the overlapping portion.

In a case where a data amount of the overlapping portion of the first image data and the second image data is greater than a preset threshold, the image data of a part of the overlapping portion may be intercepted for calculation. If a distortion of the image data exists, an operation for image alignment may be realized by using other algorithms such as the ORB algorithm and the BRIEF algorithm to ensure the accuracy.

In some exemplary implementations, acquiring the fourth luminance data from the first luminance data according to the size of the fourth luminance data and the second position includes: acquiring the luminance data, having a size the same as the size of the fourth luminance data, from the first luminance data by taking the second position as a center, as the fourth luminance data.

In a third case, a field of view corresponding to the first image data is greater than a field of view corresponding to the second image data; and the second camera lens is the camera lens operating before switching between camera lenses is performed, and the first camera lens is the camera lens operating after switching between camera lenses is performed; or the second camera lens is the camera lens operating before digital zooming is performed, and the first camera lens is the camera lens operating after digital zooming is performed; or the second camera lens is the camera lens currently performing digital zooming, and the first camera lens is the camera lens having the digital zoom range with the minimum difference from the digital zoom range of the second camera lens.

In some exemplary implementations, fusing the first image data and the second image data according to the first chrominance data and the first luminance data to obtain the fused image data includes: in the case where the field of view corresponding to the first image data is greater than the field of view corresponding to the second image data, acquiring third image data from the first image data, with the third image data having a field of view the same as the field of view corresponding to the second image data; scaling the second image data to obtain fourth image data having a size the same as a size of the third image data; combining fifth chrominance data in the third image data with third luminance data in the fourth image data to obtain fifth image data; and replacing the third image data in the first image data with the fifth image data to obtain the fused image data.

In some exemplary implementations, acquiring the third image data from the first image data includes: determining a size of the third image data according to the field of view corresponding to the first image data and the field of view corresponding to the second image data; determining a first position of a center of the second image data in the first image data; and acquiring the third image data from the first image data according to the size of the third image data and the first position.

**In** some exemplary implementations, determining the size of the third image data according to the field of view corresponding to the first image data and the field of view corresponding to the second image data includes: determining a first scale factor according to the field of view corresponding to the first image data and the field of view corresponding to the second image data; and determining the size of the third image data according to the first scale factor.

In some exemplary implementations, determining the first scale factor according to the field of view corresponding to the first image data and the field of view corresponding to the second image data includes: calculating the first scale factor by a formula $Fk 1 = \frac{tan \frac{{FOV}_{2}}{2}}{tan \frac{{FOV}_{1}}{2}}$, where Fk1 is the first scale factor, FOV₂ is the field of view corresponding to the second image data, and FOV₁ is the field of view corresponding to the first image data.

In some exemplary implementations, determining the size of the third image data according to the first scale factor includes: determining a length of the third image data to be h4×Fk1 and a width of the third image data to be w4×Fk1, where Fk1 is the first scale factor, h4 is a length of the first image data, and w4 is a width of the first image data.

In some exemplary implementations, determining the first position of the center of the second image data in the first image data includes: determining the first position according to a pre-stored offset between the first camera lens and the second camera lens.

In some exemplary implementations, the offset between the first camera lens and the second camera lens is an offset between a center of the first image data and the center of the second image data.

In some exemplary implementations, determining the first position of the center of the second image data in the first image data includes: searching a preset central neighborhood in the first image data for a position with a minimum shooting deviation as the first position.

In some exemplary implementations, in a case where any pixel in the central neighborhood overlaps a center pixel of the second image data, a shooting deviation of an overlapping portion of the first image data and the second image data (i.e., the first image data and the second image data are overlapped in the overlapping portion) is calculated by a formula $Δ E = \frac{1}{h 2 \times w 2} {\sum }_{i = 0}^{h 2} {\sum }_{j = 0}^{w 2} {\left({D}_{1}\left(i, j\right)-{D}_{2}\left(i, j\right)\right)}^{2}$, and a position of the pixel corresponding to the minimum shooting deviation is the first position.

ΔE is the shooting deviation, h2 is a length of the overlapping portion of the first image data and the second image data, w2 is a width of the overlapping portion of the first image data and the second image data, *D*₁(*i*, *j*) is a value of a pixel in an i^{th} row and in a j^{th} column of the image data of the first image data in the overlapping portion, and *D*₂(*i, j*) is a value of a pixel in an i^{th} row and in a j^{th} column of the image data of the second image data in the overlapping portion.

In a case where a data amount of the overlapping portion of the first image data and the second image data is greater than a preset threshold, the image data of a part of the overlapping portion may be intercepted for calculation. If a distortion of the image data exists, an operation for image alignment may be realized by using other algorithms such as the ORB algorithm and the BRIEF algorithm to ensure the accuracy.

In some exemplary implementations, acquiring the third image data from the first image data according to the size of the third image data and the first position includes: acquiring the image data, having a size the same as the size of the third image data, from the first image data by taking the first position as a center, as the third image data.

In a fourth case, a field of view corresponding to the first image data is less than a field of view corresponding to the second image data; and the first camera lens is the camera lens operating before switching between camera lenses is performed, and the second camera lens is the camera lens operating after switching between camera lenses is performed; or the first camera lens is the camera lens operating before digital zooming is performed, and the second camera lens is the camera lens operating after digital zooming is performed; or the first camera lens is the camera lens currently performing digital zooming, and the second camera lens is the camera lens having the digital zoom range with the minimum difference from the digital zoom range of the first camera lens.

In some exemplary implementations, fusing the first image data and the second image data according to the first chrominance data and the first luminance data to obtain the fused image data includes: in the case where the field of view corresponding to the first image data is less than the field of view corresponding to the second image data, acquiring sixth image data from the second image data, with the sixth image data having a field of view the same as the field of view corresponding to the first image data; scaling the first image data to obtain seventh image data having a size the same as a size of the sixth image data; combining sixth chrominance data in the seventh image data and sixth luminance data in the sixth image data to obtain eighth image data; and replacing the sixth image data in the second image data with the eighth image data to obtain the fused image data.

In some exemplary implementations, acquiring the sixth image data from the second image data includes: determining a size of the sixth image data according to the field of view corresponding to the first image data and the field of view corresponding to the second image data; determining a second position of a center of the first image data in the second image data; and acquiring the sixth image data from the second image data according to the size of the sixth image data and the second position.

In some exemplary implementations, determining the size of the sixth image data according to the field of view corresponding to the first image data and the field of view corresponding to the second image data includes: determining a second scale factor according to the field of view corresponding to the first image data and the field of view corresponding to the second image data; and determining the size of the sixth image data according to the second scale factor.

In some exemplary implementations, determining the second scale factor according to the field of view corresponding to the first image data and the field of view corresponding to the second image data includes: calculating the second scale factor by a formula $Fk 2 = \frac{tan \frac{{FOV}_{1}}{2}}{tan \frac{{FOV}_{2}}{2}}$, where Fk2 is the second scale factor, FOV₂ is the field of view corresponding to the second image data, and FOV₁ is the field of view corresponding to the first image data.

In some exemplary implementations, determining the size of the sixth image data according to the second scale factor includes: determining a length of the sixth image data to be h4×Fk2 and a width of the sixth image data to be w4×Fk2, where Fk2 is the second scale factor, h4 is a length of the second image data, and w4 is a width of the second image data.

In some exemplary implementations, determining the second position of the center of the first image data in the second image data includes: determining the second position according to a pre-stored offset between the first camera lens and the second camera lens.

In some exemplary implementations, the offset between the first camera lens and the second camera lens is an offset between the center of the first image data and a center of the second image data.

In some exemplary implementations, determining the second position of the center of the first image data in the second image data includes: searching a preset central neighborhood in the second image data for a position with a minimum shooting deviation as the second position.

In some exemplary implementations, in a case where any pixel in the central neighborhood overlaps a center pixel of the first image data, a shooting deviation of an overlapping portion of the first image data and the second image data (i.e., the first image data and the second image data are overlapped in the overlapping portion) is calculated by a formula $Δ E = \frac{1}{h 2 \times w 2} {\sum }_{i = 0}^{h 2} {\sum }_{j = 0}^{w 2} {\left({D}_{1}\left(i, j\right)-{D}_{2}\left(i, j\right)\right)}^{2}$, and a position of the pixel corresponding to the minimum shooting deviation is the second position.

ΔE is the shooting deviation, h2 is a length of the overlapping portion of the first image data and the second image data, w2 is a width of the overlapping portion of the first image data and the second image data, *D*₁(*i, j*) is a value of a pixel in an i^{th} row and in a j^{th} column of the image data of the first image data in the overlapping portion, and *D*₂(*i, j*) is a value of a pixel in an i^{th} row and in a j^{th} column of the image data of the second image data in the overlapping portion.

In a case where a data amount of the overlapping portion of the first image data and the second image data is greater than a preset threshold, the image data of a part of the overlapping portion may be intercepted for calculation. If a distortion of the image data exists, an operation for image alignment may be realized by using other algorithms such as the ORB algorithm and the BRIEF algorithm to ensure the accuracy.

In some exemplary implementations, acquiring the sixth image data from the second image data according to the size of the sixth image data and the second position includes: acquiring the image data, having a size the same as the size of the sixth image data, from the second image data by taking the second position as a center, as the sixth image data.

In a fifth case, the first camera lens is the camera lens operating before switching between camera lenses is performed, and the second camera lens is the camera lens operating after switching between camera lenses is performed; or the first camera lens is the camera lens operating before digital zooming is performed, and the second camera lens is the camera lens operating after digital zooming is performed; or the first camera lens is the camera lens currently performing digital zooming, and the second camera lens is the camera lens having the digital zoom range with the minimum difference from the digital zoom range of the first camera lens.

In some exemplary implementations, fusing the first image data and the second image data according to the first chrominance data and the first luminance data to obtain the fused image data includes: acquiring sixth chrominance data from the first chrominance data, and acquiring fourth luminance data from the first luminance data, with a field of view corresponding to the sixth chrominance data being the same as a field of view corresponding to the fourth luminance data; scaling the sixth chrominance data to obtain seventh chrominance data having a size the same as a size of the fourth luminance data; combining the seventh chrominance data with the fourth luminance data to obtain seventh image data; and replacing the image data, which is the same as the fourth luminance data in position and size, in the second image data with the seventh image data to obtain the fused image data.

In some exemplary implementations, positions of the sixth chrominance data and the fourth luminance data may be set in advance or selected and determined by a user.

If a distortion of the image data exists, an operation for image alignment may be realized by using other algorithms such as the ORB algorithm and the BRIEF algorithm to ensure the accuracy.

In a sixth case, the second camera lens is the camera lens operating before switching between camera lenses is performed, and the first camera lens is the camera lens operating after switching between camera lenses is performed; or the second camera lens is the camera lens operating before digital zooming is performed, and the first camera lens is the camera lens operating after digital zooming is performed; or the second camera lens is the camera lens currently performing digital zooming, and the first camera lens is the camera lens having the digital zoom range with the minimum difference from the digital zoom range of the second camera lens.

In some exemplary implementations, fusing the first image data and the second image data according to the first chrominance data and the first luminance data to obtain the fused image data includes: acquiring sixth chrominance data from the first chrominance data, and acquiring fourth luminance data from the first luminance data, with a field of view corresponding to the sixth chrominance data being the same as a field of view corresponding to the fourth luminance data; scaling the fourth luminance data to obtain fifth luminance data having a size the same as a size of the sixth chrominance data; combining the fifth luminance data with the sixth chrominance data to obtain eighth image data; and replacing the image data, which is the same as the sixth chrominance data in position and size, in the first image data with the eighth image data to obtain the fused image data.

If a distortion of the image data exists, an operation for image alignment may be realized by using other algorithms such as the ORB algorithm and the BRIEF algorithm to ensure the accuracy.

In operation 102, the fused image data is displayed.

According to the image processing method provided by the embodiment of the present disclosure, in the case where the first chrominance data of the first image data is superior to the second chrominance data of the second image data and the first luminance data of the second image data is superior to the second luminance data of the first image data, the first image data and the second image data are fused according to the first chrominance data and the first luminance data to obtain the fused image data, so that a definition of the fused image data is improved and the chrominance data of the first image data is retained, and the smoothness of the process of switching or zooming during the digital zooming or the switching between camera lenses is improved.

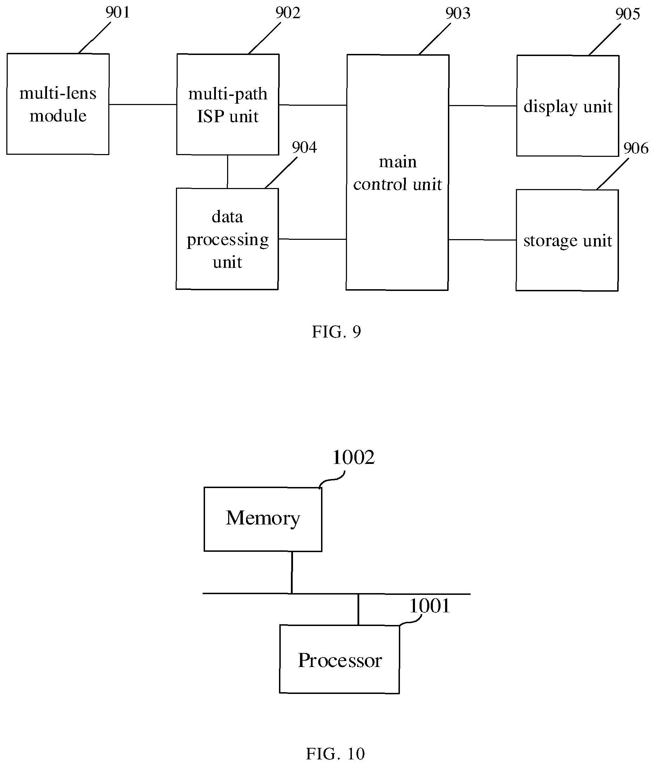

In a second aspect, an embodiment of the present disclosure provides an electronic device shown in FIG. 10, including: at least one processor 1001 (merely one processor is shown in FIG. 10); and a memory 1002 having stored thereon at least one computer program, the at least one computer program, executed by the at least one processor 1001, causes the at least one processor 1001 to implement the image processing method described above.

The processor 1001 is a device having data processing capability, and includes, but is not limited to, a Central Processing Unit (CPU); and the memory 1002 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some implementations, the processor 1001 and the memory 1002 are connected to each other through a bus, and then are connected to other components of a computing device.

In a third aspect, an embodiment of the present disclosure provides a computer readable storage medium having stored thereon a computer program, the computer program, executed by a processor, causes the processor to implement the image processing method described above.

FIG. 8 is a block diagram of an image processing apparatus according to an embodiment of the present disclosure.

In a fourth aspect, referring to FIG. 8, an embodiment of the present disclosure provides an image processing apparatus, which includes an image data acquisition module 801, an image data processing module 802, and a display module 803.

The image data acquisition module 801 is configured to acquire first image data corresponding to a first image captured by a first camera lens and acquire second image data corresponding to a second image captured by a second camera lens.

The image data processing module 802 is configured to fuse, in a case where first chrominance data of the first image data is superior to second chrominance data of the second image data and first luminance data of the second image data is superior to second luminance data of the first image data, the first image data and the second image data according to the first chrominance data and the first luminance data to obtain fused image data.

The display module 803 is configured to display the fused image data.

In some exemplary implementations, the image data processing module 802 is configured to fuse the first image data and the second image data according to the first chrominance data and the first luminance data to obtain the fused image data by: in a case where a field of view corresponding to the first image data is greater than a field of view corresponding to the second image data, acquiring third chrominance data from the first chrominance data, with the third chrominance data having a field of view the same as a field of view corresponding to the first luminance data; scaling the third chrominance data to obtain fourth chrominance data having a size the same as a size of the first luminance data; and combining the fourth chrominance data with the first luminance data to obtain the fused image data.

In some exemplary implementations, the image data processing module 802 is configured to acquire the third chrominance data from the first chrominance data by: determining a size of the third chrominance data according to the field of view corresponding to the first image data and the field of view corresponding to the second image data; determining a first position of a center of the second image data in the first image data; and acquiring the third chrominance data from the first chrominance data according to the size of the third chrominance data and the first position.

In some exemplary implementations, the image data processing module 802 is configured to determine the size of the third chrominance data according to the field of view corresponding to the first image data and the field of view corresponding to the second image data by: determining a first scale factor according to the field of view corresponding to the first image data and the field of view corresponding to the second image data; and determining the size of the third chrominance data according to the first scale factor.

In some exemplary implementations, determining the first scale factor according to the field of view corresponding to the first image data and the field of view corresponding to the second image data includes: calculating the first scale factor by a formula $Fk 1 = \frac{tan \frac{{FOV}_{2}}{2}}{tan \frac{{FOV}_{1}}{2}}$, where Fk1 is the first scale factor, FOV₂ is the field of view corresponding to the second image data, and FOV₁ is the field of view corresponding to the first image data.

In some exemplary implementations, the image data processing module 802 is configured to determine the size of the third chrominance data according to the first scale factor by: determining a length of the third chrominance data to be h1×Fk1 and a width of the third chrominance data to be w1×Fk1, where Fk1 is the first scale factor, h1 is a length of the first chrominance data, and w1 is a width of the first chrominance data.

In some exemplary implementations, the image data processing module 802 is configured to determine the position of the center of the second image data in the first image data by: determining the position of the center of the second image data in the first image data according to a pre-stored offset between the first camera lens and the second camera lens.

In some exemplary implementations, the image data processing module 802 is configured to determine the position of the center of the second image data in the first image data by: searching a preset central neighborhood in the first image data for a position with a minimum shooting deviation as the position of the center of the second image data in the first image data.

In some exemplary implementations, the image data processing module 802 is configured to fuse the first image data and the second image data according to the first chrominance data and the first luminance data to obtain the fused image data by: in a case where a field of view corresponding to the first image data is less than a field of view corresponding to the second image data, acquiring fourth luminance data from the first luminance data, with the fourth luminance data having a field of view the same as a field of view corresponding to the first chrominance data; scaling the fourth luminance data to obtain fifth luminance data having a size the same as a size of the first chrominance data; and combining the fifth luminance data with the first chrominance data to obtain the fused image data.

In some exemplary implementations, the first camera lens is a camera lens operating before switching between camera lenses is performed, and the second camera lens is a camera lens operating after switching between camera lenses is performed; or the first camera lens is a camera lens operating before digital zooming is performed, and the second camera lens is a camera lens operating after digital zooming is performed; or the first camera lens is a camera lens currently performing digital zooming, and the second camera lens is a camera lens having a digital zoom range with the minimum difference from a digital zoom range of the first camera lens.

In some exemplary implementations, the image data processing module 802 is configured to fuse the first image data and the second image data according to the first chrominance data and the first luminance data to obtain the fused image data by: in a case where a field of view corresponding to the first image data is greater than a field of view corresponding to the second image data, acquiring third image data from the first image data, with the third image data having a field of view the same as the field of view corresponding to the second image data; scaling the second image data to obtain fourth image data having a size the same as a size of the third image data; combining fifth chrominance data in the third image data with third luminance data in the fourth image data to obtain fifth image data; and replacing the third image data in the first image data with the fifth image data to obtain the fused image data.

In some exemplary implementations, the image data processing module 802 is configured to fuse the first image data and the second image data according to the first chrominance data and the first luminance data to obtain the fused image data by: in a case where a field of view corresponding to the first image data is less than a field of view corresponding to the second image data, acquiring sixth image data from the second image data, with the sixth image data having a field of view the same as the field of view corresponding to the first image data; scaling the first image data to obtain seventh image data having a size the same as a size of the sixth image data; combining sixth chrominance data in the seventh image data with sixth luminance data in the sixth image data to obtain eighth image data; and replacing the sixth image data in the second image data with the eighth image data to obtain the fused image data.

In some exemplary implementations, the second camera lens is a camera lens operating before switching between camera lenses is performed, and the first camera lens is a camera lens operating after switching between camera lenses is performed; or the second camera lens is a camera lens operating before digital zooming is performed, and the first camera lens is a camera lens operating after digital zooming is performed; or the second camera lens is a camera lens currently performing digital zooming, and the first camera lens is a camera lens having a digital zoom range with the minimum difference from a digital zoom range of the second camera lens.

In some exemplary implementations, the image data processing module 802 is configured to fuse the first image data and the second image data according to the first chrominance data and the first luminance data to obtain the fused image data by: acquiring sixth chrominance data from the first chrominance data, and acquiring fourth luminance data from the first luminance data, with a field of view corresponding to the sixth chrominance data being the same as a field of view corresponding to the fourth luminance data; scaling the sixth chrominance data to obtain seventh chrominance data have a size the same as a size of the fourth luminance data; combining the seventh chrominance data with the fourth luminance data to obtain seventh image data; and replacing the image data, which is the same as the fourth luminance data in position and size, in the second image data with the seventh image data to obtain the fused image data.

In some exemplary implementations, the image data processing module 802 is configured to fuse the first image data and the second image data according to the first chrominance data and the first luminance data to obtain the fused image data by: acquiring sixth chrominance data from the first chrominance data, and acquiring fourth luminance data from the first luminance data, with a field of view corresponding to the sixth chrominance data being the same as a field of view corresponding to the fourth luminance data; scaling the fourth luminance data to obtain fifth luminance data having a size the same as a size of the sixth chrominance data; combining the fifth luminance data with the sixth chrominance data to obtain eighth image data; and replacing the image data, which is the same as the sixth chrominance data in position and size, in the first image data with the eighth image data to obtain the fused image data.

Specific implementations of the image processing apparatus are the same as those of the image processing method described above, and thus will not be repeated here.

FIG. 9 is a block diagram of a terminal according to an embodiment of the present disclosure. As shown in FIG. 9, the terminal according to the embodiment of the present disclosure includes: a multi-lens module 901, a multi-path ISP unit 902, a main control unit 903, a data processing unit 904, a display unit 905, and a storage unit 906. The image data acquisition module 801 may be provided in the multi-lens module 901, and the image data processing module 802 may be provided in the data processing unit 904.

The multi-lens module 901 is configured to acquire image data.

The multi-path ISP unit 902 is configured to control operating states of camera lenses in the multi-lens module 901, to realize AWB processing, automatic focus (AF) processing, AE processing, color processing or the like on images collected by the camera lenses in the multi-lens module 901.

The data processing unit 904 is configured to process the image data, for example, to realize functions such as image fusion, image alignment, a conversion of FOV of an image. The data processing unit 904 may be program code stored in the storage unit 906, to be executed by the main control unit 903 to implement functions such as image fusion, image alignment, and a conversion of FOV of an image.

The main control unit 903 is configured to control an operation of other modules or units. The main control unit 903 may be a central processing unit (CPU) or an image processing chip, and implements the functions such as image fusion, image alignment, and a conversion of FOV of an image by executing a program of the data processing unit 904.

The display unit 905 is configured to perform image preview and display of a control interface. The display unit 905 may be a display screen of a terminal or the like.

The storage unit 906 is configured to store the image data. The storage unit 906 may be a built-in memory or an external storage device.

It should be understood by those of ordinary skill in the art that the functional modules/units in all or some of the operations and the devices in the methods disclosed above may be implemented as software, firmware, hardware, or suitable combinations thereof. If implemented as hardware, the dividing between the functional modules/units stated above is not necessarily corresponding to the dividing of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details may be made without departing from the scope of the present disclosure as claimed by the appended claims.

## Claims

1. An image processing method, comprising:
acquiring first image data corresponding to a first image captured by a first camera lens, and acquiring second image data corresponding to a second image captured by a second camera lens (100);
in response to that first chrominance data of the first image data is superior to second chrominance data of the second image data and first luminance data of the second image data is superior to second luminance data of the first image data, fusing the first image data and the second image data according to the first chrominance data and the first luminance data to obtain fused image data (101); and
displaying the fused image data (102),
wherein one of the first camera lens and the second camera lens is a camera lens operating before switching between camera lenses is performed, and another one of the first camera lens and the second camera lens is a camera lens operating after switching between camera lenses is performed,
the fusing the first image data and the second image data according to the first chrominance data and the first luminance data to obtain fused image data (101) comprises:
acquiring sixth chrominance data from the first chrominance data, and acquiring fourth luminance data from the first luminance data, with a field of view corresponding to the sixth chrominance data being the same as a field of view corresponding to the fourth luminance data;
in response to the first camera lens being the camera lens operating before switching between camera lenses is performed, scaling the sixth chrominance data to obtain seventh chrominance data having a size the same as a size of the fourth luminance data, combining the seventh chrominance data with the fourth luminance data to obtain seventh image data, and replacing image data, the same as the fourth luminance data in position and size, in the second image data with the seventh image data to obtain the fused image data;
in response to the second camera lens being the camera lens operating before switching between camera lenses is performed, scaling the fourth luminance data to obtain fifth luminance data having a size the same as a size of the sixth chrominance data, combining the fifth luminance data with the sixth chrominance data to obtain eighth image data, and replacing image data, the same as the sixth chrominance data in position and size, in the first image data with the eighth image data to obtain the fused image data.

2. The image processing method of claim 1, wherein the first camera lens is the camera lens operating before switching between camera lenses is performed, a field of view corresponding to the first image data is greater than a field of view corresponding to the second image data, the fourth luminance data is the same as the first luminance data, the acquiring sixth chrominance data from the first chrominance data comprises:
determining a size of the sixth chrominance data according to the field of view corresponding to the first image data and the field of view corresponding to the second image data;
determining a first position of a center of the second image data in the first image data; and
acquiring the sixth chrominance data from the first chrominance data according to the size of the sixth chrominance data and the first position.

3. The image processing method of claim 2, wherein the determining a size of the sixth chrominance data according to the field of view corresponding to the first image data and the field of view corresponding to the second image data comprises:
determining a first scale factor according to the field of view corresponding to the first image data and the field of view corresponding to the second image data; and
determining the size of the sixth chrominance data according to the first scale factor.

4. The image processing method of claim 3, wherein the determining the size of the sixth chrominance data according to the first scale factor comprises:
determining a length of the sixth chrominance data to be h1×Fk1 and a width of the sixth chrominance data to be w1×Fk1,
where Fk1 is the first scale factor, h1 is a length of the first chrominance data, and w1 is a width of the first chrominance data.

5. The image processing method of claim 2, wherein the determining a first position of a center of the second image data in the first image data comprises:
determining the first position according to a pre-stored offset between the first camera lens and the second camera lens; or
searching a preset central neighborhood in the first image data for a position with a minimum shooting deviation as the first position.

6. The image processing method of claim 1, wherein the second camera lens is the camera lens operating before switching between camera lenses is performed, a field of view corresponding to the first image data is less than a field of view corresponding to the second image data, and the sixth chrominance data is the same as the first chrominance data.

7. An electronic device, comprising:
at least one processor (1001); and
a memory (1002) having stored thereon at least one computer program, the at least one computer program, executed by the at least one processor (1001), causes the at least one processor (1001) to implement the image processing method of any one of claims 1 to 6.

8. A computer readable storage medium having stored thereon a computer program, the computer program, executed by a processor, causes the processor to implement the image processing method of any one of claims 1 to 6.

## Patentansprüche

1. Bildverarbeitungsverfahren, umfassend:
Erfassen von ersten Bilddaten, die einem ersten Bild entsprechen, das durch ein erstes Kameraobjektiv aufgenommen wird, und Erfassen von zweiten Bilddaten, die einem zweiten Bild entsprechen, das durch ein zweites Kameraobjektiv aufgenommen wird (100);
als Reaktion darauf, dass erste Chrominanzdaten der ersten Bilddaten besser als zweite Chrominanzdaten der zweiten Bilddaten sind und erste Luminanzdaten der zweiten Bilddaten besser als zweite Luminanzdaten der ersten Bilddaten sind, Vereinigen der ersten Bilddaten und der zweiten Bilddaten gemäß den ersten Chrominanzdaten und den ersten Luminanzdaten, um vereinigte Bilddaten zu erhalten (101); und
Anzeigen der vereinigten Bilddaten (102),
wobei eines des ersten Kameraobjektivs und des zweiten Kameraobjektivs ein Kameraobjektiv ist, das funktioniert, bevor ein Umschalten zwischen den Kameraobjektiven durchgeführt wird, und wobei ein anderes des ersten Kameraobjektivs und des zweiten Kameraobjektivs ein Kameraobjektiv ist, das funktioniert, nachdem ein Umschalten zwischen den Kameraobjektiven durchgeführt wurde,
wobei das Vereinigen der ersten Bilddaten und der zweiten Bilddaten gemäß den ersten Chrominanzdaten und den ersten Luminanzdaten, um vereinigte Bilddaten zu erhalten (101), umfasst:
Erfassen von sechsten Chrominanzdaten aus den ersten Chrominanzdaten und Erfassen von vierten Luminanzdaten aus den ersten Luminanzdaten, wobei ein Blickfeld, das den sechsten Chrominanzdaten entspricht, gleich einem Blickfeld ist, das den vierten Luminanzdaten entspricht;
als Reaktion darauf, dass das erste Kameraobjektiv das Kameraobjektiv ist, das funktioniert, bevor ein Umschalten zwischen den Kameraobjektiven durchgeführt wird, Skalieren der sechsten Chrominanzdaten, um siebte Chrominanzdaten zu erhalten, die eine Größe aufweisen, die gleich einer Größe der vierten Luminanzdaten ist, Kombinieren der siebten Chrominanzdaten mit den vierten Luminanzdaten, um siebte Bilddaten zu erhalten, und Ersetzen von Bilddaten, deren Position und Größe gleich den vierten Luminanzdaten sind, in den zweiten Bilddaten durch die siebten Bilddaten, um die vereinigten Bilddaten zu erhalten;
als Reaktion darauf, dass das zweite Kameraobjektiv das Kameraobjektiv ist, das funktioniert, bevor ein Umschalten zwischen Kameraobjektiven durchgeführt wird, Skalieren der vierten Luminanzdaten, um fünfte Luminanzdaten zu erhalten, die eine Größe aufweisen, die gleich einer Größe der sechsten Chrominanzdaten ist, Kombinieren der fünften Luminanzdaten mit den sechsten Chrominanzdaten, um achte Bilddaten zu erhalten, und Ersetzen von Bilddaten, deren Position und Größe gleich den sechsten Chrominanzdaten sind, in den ersten Bilddaten durch die achten Bilddaten, um die vereinigten Bilddaten zu erhalten.

2. Bildverarbeitungsverfahren nach Anspruch 1, wobei das erste Kameraobjektiv das Kameraobjektiv ist, das funktioniert, bevor ein Umschalten zwischen den Kameraobjektiven durchgeführt wird, wobei ein Blickfeld, das den ersten Bilddaten entspricht, größer als ein Blickfeld ist, das den zweiten Bilddaten entspricht, wobei die vierten Luminanzdaten die gleichen wie die ersten Luminanzdaten sind, wobei das Erfassen von sechsten Chrominanzdaten aus den ersten Chrominanzdaten umfasst:
Ermitteln einer Größe der sechsten Chrominanzdaten gemäß dem Blickfeld, das den ersten Bilddaten entspricht, und dem Blickfeld, das den zweiten Bilddaten entspricht;
Ermitteln einer ersten Position eines Zentrums der zweiten Bilddaten in den ersten Bilddaten; und
Erfassen der sechsten Chrominanzdaten aus den ersten Chrominanzdaten gemäß der Größe der sechsten Chrominanzdaten und der ersten Position.

3. Bildverarbeitungsverfahren nach Anspruch 2, wobei das Ermitteln einer Größe der sechsten Chrominanzdaten gemäß dem Blickfeld, das den ersten Bilddaten entspricht, und dem Blickfeld, das den zweiten Bilddaten entspricht, umfasst:
Ermitteln eines ersten Skalierungsfaktors gemäß dem Blickfeld, das den ersten Bilddaten entspricht, und dem Blickfeld, das den zweiten Bilddaten entspricht; und
Ermitteln der Größe der sechsten Chrominanzdaten gemäß dem ersten Skalierungsfaktor.

4. Bildverarbeitungsverfahren nach Anspruch 3, wobei das Ermitteln der Größe der sechsten Chrominanzdaten gemäß dem ersten Skalierungsfaktor umfasst:
Ermitteln, dass eine Länge der sechsten Chrominanzdaten gleich h1xFk1 ist und eine Breite der sechsten Chrominanzdaten gleich w1xFk1 ist,
wobei Fk1 der erste Skalierungsfaktor ist, h1 eine Länge der ersten Chrominanzdaten ist und w1 eine Breite der ersten Chrominanzdaten ist.

5. Bildverarbeitungsverfahren nach Anspruch 2, wobei das Ermitteln einer ersten Position eines Zentrums der zweiten Bilddaten in den ersten Bilddaten umfasst:
Ermitteln der ersten Position gemäß einem vorab gespeicherten Versatz zwischen dem ersten Kameraobjektiv und dem zweiten Kameraobjektiv; oder
Suchen einer voreingestellten zentralen Nachbarschaft in den ersten Bilddaten nach einer Position mit einer minimalen Aufnahmeabweichung als die erste Position.

6. Bildverarbeitungsverfahren nach Anspruch 1, wobei das zweite Kameraobjektiv das Kameraobjektiv ist, das funktioniert, bevor ein Umschalten zwischen Kameraobjektiven durchgeführt wird, wobei ein Blickfeld, das den ersten Bilddaten entspricht, kleiner als ein Blickfeld ist, das den zweiten Bilddaten entspricht, und wobei die sechsten Chrominanzdaten die gleichen wie die ersten Chrominanzdaten sind.

7. Elektronische Vorrichtung, umfassend:
mindestens einen Prozessor (1001); und
einen Speicher (1002), in dem mindestens ein Computerprogramm gespeichert ist, wobei das mindestens eine Computerprogramm, wenn es von dem mindestens einen Prozessor (1001) ausgeführt wird, den mindestens einen Prozessor (1001) veranlasst, das Bildverarbeitungsverfahren nach einem der Ansprüche 1 bis 6 zu implementieren.

8. Computerlesbares Speichermedium, in dem ein Computerprogramm gespeichert ist, wobei das Computerprogramm, wenn es von einem Prozessor ausgeführt wird, den Prozessor veranlasst, das Bildverarbeitungsverfahren nach einem der Ansprüche 1 bis 6 zu implementieren.

## Revendications

1. Procédé de traitement d'image, comprenant :
l'acquisition de premières données d'image correspondant à une première image capturée par un premier objectif de caméra, et l'acquisition de secondes données d'image correspondant à une seconde image capturée par un second objectif de caméra (100) ;
en réponse au fait que des premières données de chrominance des premières données d'image sont supérieures à des secondes données de chrominance des secondes données d'image et que des premières données de luminance des secondes données d'image sont supérieures à des secondes données de luminance des premières données d'image, la fusion des premières données d'image et des secondes données d'image en fonction des premières données de chrominance et des premières données de luminance pour obtenir des données d'image fusionnées (101) ; et
l'affichage des données d'image fusionnées (102),
dans lequel l'un du premier objectif de caméra et du second objectif de caméra est un objectif de caméra fonctionnant avant l'exécution d'une commutation entre les objectifs de caméra, et un autre du premier objectif de caméra et du second objectif de caméra est un objectif de caméra fonctionnant après l'exécution d'une commutation entre les objectifs de caméra,
la fusion des premières données d'image et des secondes données d'image en fonction des premières données de chrominance et des premières données de luminance pour obtenir des données d'image fusionnées (101) comprend :
l'acquisition de sixièmes données de chrominance à partir des premières données de chrominance, et l'acquisition de quatrièmes données de luminance à partir des premières données de luminance, un champ de vision correspondant aux sixièmes données de chrominance étant le même qu'un champ de vision correspondant aux quatrièmes données de luminance ;
en réponse au fait que le premier objectif de caméra est l'objectif de caméra fonctionnant avant l'exécution d'une commutation entre les objectifs de caméra, la mise à l'échelle des sixièmes données de chrominance pour obtenir des septièmes données de chrominance ayant une taille identique à une taille des quatrièmes données de luminance, la combinaison des septièmes données de chrominance avec les quatrièmes données de luminance pour obtenir des septièmes données d'image, et le remplacement de données d'image, identiques aux quatrièmes données de luminance en position et en taille, dans les secondes données d'image par les septièmes données d'image pour obtenir les données d'image fusionnées ;
en réponse au fait que le second objectif de caméra est l'objectif de caméra fonctionnant avant l'exécution d'une commutation entre les objectifs de caméra, la mise à l'échelle des quatrièmes données de luminance pour obtenir des cinquièmes données de luminance ayant une taille identique à une taille des sixièmes données de chrominance, la combinaison des cinquièmes données de luminance avec les sixièmes données de chrominance pour obtenir des huitièmes données d'image, et le remplacement des données d'image, identiques aux sixièmes données de chrominance en position et en taille, dans les premières données d'image par les huitièmes données d'image pour obtenir les données d'image fusionnées.

2. Procédé de traitement d'image selon la revendication 1, dans lequel le premier objectif de caméra est l'objectif de caméra fonctionnant avant l'exécution d'une commutation entre les objectifs de caméra, un champ de vision correspondant aux premières données d'image est supérieur à un champ de vision correspondant aux secondes données d'image, les quatrièmes données de luminance sont les mêmes que les premières données de luminance, l'acquisition des sixièmes données de chrominance à partir des premières données de chrominance comprend :
la détermination d'une taille des sixièmes données de chrominance en fonction du champ de vision correspondant aux premières données d'image et du champ de vision correspondant aux secondes données d'image ;
la détermination d'une première position d'un centre des secondes données d'image dans les premières données d'image ; et
l'acquisition des sixièmes données de chrominance à partir des premières données de chrominance en fonction de la taille des sixièmes données de chrominance et de la première position.

3. Procédé de traitement d'image selon la revendication 2, dans lequel la détermination d'une taille des sixièmes données de chrominance en fonction du champ de vision correspondant aux premières données d'image et du champ de vision correspondant aux secondes données d'image comprend :
la détermination d'un premier facteur d'échelle en fonction du champ de vision correspondant aux premières données d'image et du champ de vision correspondant aux secondes données d'image ; et
la détermination de la taille des sixièmes données de chrominance en fonction du premier facteur d'échelle.

4. Procédé de traitement d'image selon la revendication 3, dans lequel la détermination de la taille des sixièmes données de chrominance en fonction du premier facteur d'échelle comprend :
la détermination d'une longueur des sixièmes données de chrominance à hlxFk1 et d'une largeur des sixièmes données de chrominance à w1xFk1,
où Fk1 est le premier facteur d'échelle, h1 est une longueur des premières données de chrominance et w1 est une largeur des premières données de chrominance.

5. Procédé de traitement d'image selon la revendication 2, dans lequel la détermination d'une première position d'un centre des secondes données d'image dans les premières données d'image comprend :
la détermination de la première position en fonction d'un décalage pré-mémorisé entre le premier objectif de caméra et le second objectif de caméra ; ou
la recherche d'un voisinage central prédéfini dans les premières données d'image pour une position présentant un écart de prise de vue minimal comme première position.

6. Procédé de traitement d'image selon la revendication 1, dans lequel le second objectif de caméra est l'objectif de caméra fonctionnant avant l'exécution d'une commutation entre les objectifs de caméra, un champ de vision correspondant aux premières données d'image est inférieur à un champ de vision correspondant aux secondes données d'image, et les sixièmes données de chrominance sont les mêmes que les premières données de chrominance.

7. Dispositif électronique, comprenant :
au moins un processeur (1001) ; et
une mémoire (1002) sur laquelle est stocké au moins un programme informatique, le ou les programmes informatiques, exécutés par le ou les processeurs (1001), amenant le ou les processeurs (1001) à mettre en œuvre le procédé de traitement d'image selon l'une quelconque des revendications 1 à 6.

8. Support de stockage lisible par ordinateur sur lequel est stocké un programme informatique, le programme informatique, exécuté par un processeur, amenant le processeur à mettre en œuvre le procédé de traitement d'image selon l'une quelconque des revendications 1 à 6.
